# EUROPEAN PATENT SPECIFICATION

(11) **EP 0 312 389 B1**
(45) Date of publication and mention of the grant of the patent: **13.12.1995**
(21) Application number: 88309653.9
(22) Date of filing: 14.10.1988
(51) Int. Cl.: G02F 1/133

(54) **A liquid-crystal panel**
Flüssigkristall-Anzeigetafel
Dispositif d'affichage à cristal liquide

(30) Priority: 15.10.1987 JP 260693/87
(43) Date of publication of application: 19.04.1989
(73) Proprietor: SHARP KABUSHIKI KAISHA, Osaka 545 (JP)
(72) Inventor: Yamamura, Keiji, Sakurai-shi Nara-ken (JP); Nukii, Takashi, Nara-shi Nara-ken (JP); Nakabu, Shigeo, Nara-shi Nara-ken (JP)
(74) Representative: Jones, Colin

(56) References cited:
- DE-A- 3 306 535
- GB-A- 2 032 127
- PATENT ABSTRACTS OF JAPAN, vol. 7, no. 212 (P-224)[1357], 20th September 1983; & JP-A-58 106 522
- PATENT ABSTRACTS OF JAPAN, vol. 8, no. 257 (P-316)[1694], 24th November 1984; & JP-A-59 128 519

## Description

### BACKGROUND OF THE INVENTION

### 1. Field of the invention:

This invention relates to a liquid-crystal panel with insulated-gate thin-film transistors, and more particularly, to a structure of a terminal electrode for the gate electrode of the thin-film transistor.

### 2. Description of the prior art:

By the use of amorphous silicon for the semiconductor layer and its combination with an anodic oxidation film for the gate insulator film, it is possible to obtain a thin-film transistor (TFT) with excellent characteristics in the following respects, as has already been suggested in DE-A- 3 306 535 and JP-A- 58-147069: (1) excellent insulating qualities (there being no pinholes) with superior reliability and high-voltage resistance; (2) small mobile-ion density; (3) small interface state density of the semiconductor; and (4) large field effects upon the semiconductor.

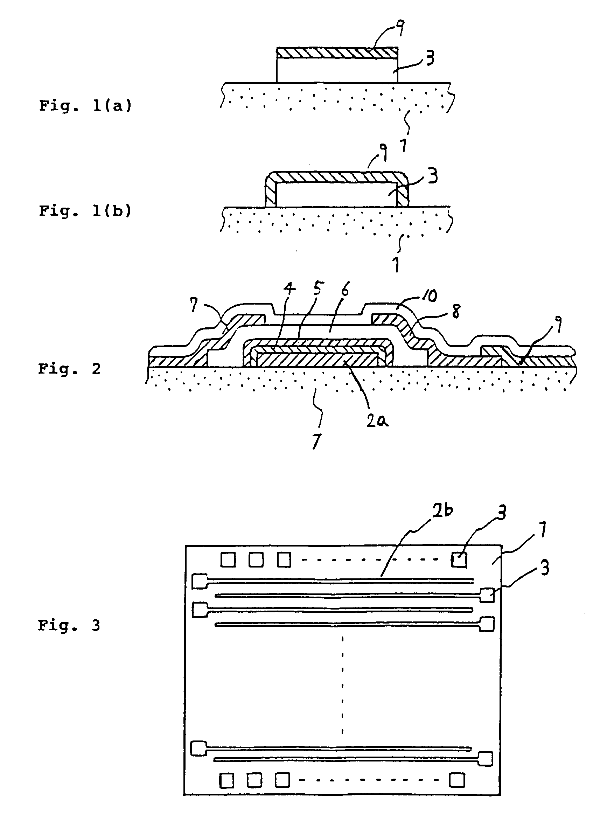

The process for the production of a liquid-crystal panel with such TFTs will be described hereinafter in detail with reference to Figs. 2 and 3 of the drawings. Figure 2 is a sectional view showing a basic structure of a known TFT. A film of Ta is deposited on the top of the glass substrate 1, and photolithography is used to form gate electrodes 2a, gate bus lines 2b, and terminal electrodes 3, in a fixed pattern (see Figure 3). Then, by the use of photolithography, only the gate electrodes 2a to be treated by anodic oxidation are exposed, and the glass substrate is immersed in an aqueous solution of ammonium tartrate for the anodic oxidation. The anodic oxidation with the use of a constant voltage of 6.5 V results in the formation of a film of Ta₂O₅ about 1000 Å thick. As a result, a gate electrode 2a of Ta and a first insulator film 4 that is made of a thin oxide film formed on the entire surface of the gate electrode 2a are obtained. On the top of the first insulator film 4, a second insulator film 5 is deposited in the form of a film of Si₃N₄ 1000 Å thick by the use of the chemical vapour deposition (CVD) method or the sputtering method. As the second insulator film 5, it is possible to use SiO, SiO₂, Y₂O₃, Al₂O₃, MgF₂, or the like, instead of the Si₃N₄. The second insulator film 5 has the function of protecting the anodic oxidation film made of Ta₂O₅ (that is, the first insulator film 4). The first insulator film 4 and the second insulator film 5 together form the gate insulator film. Next, for the semiconductor layer 6, glow discharge is used to deposit a layer of amorphous silicon 3000 Å thick, and then a layer of Ti is deposited 3000 Å thick for the source electrode 7 and the drain electrode 8, resulting in the finished TFT.

Thereafter, the transparent conductive coating 9 that is made of, for example, indium tin oxide (ITO) is formed as the picture elements. This TFT has a layer of Si₃N₄ 3000 Å thick deposited by the CVD method as a protective film 10. The protective film 10 serves not only to protect the layer of amorphous silicon, but also to deplete carriers in the vicinity of the surface of the semiconductor layer 6, decreasing the amount of leakage current in the "off" state, and thereby greatly improving the device characteristics of the TFT. Then, polyimide application and rubbing are carried out as an aligning treatment, and a liquid-crystal panel is obtained by sealing and filling with liquid crystals (not shown).

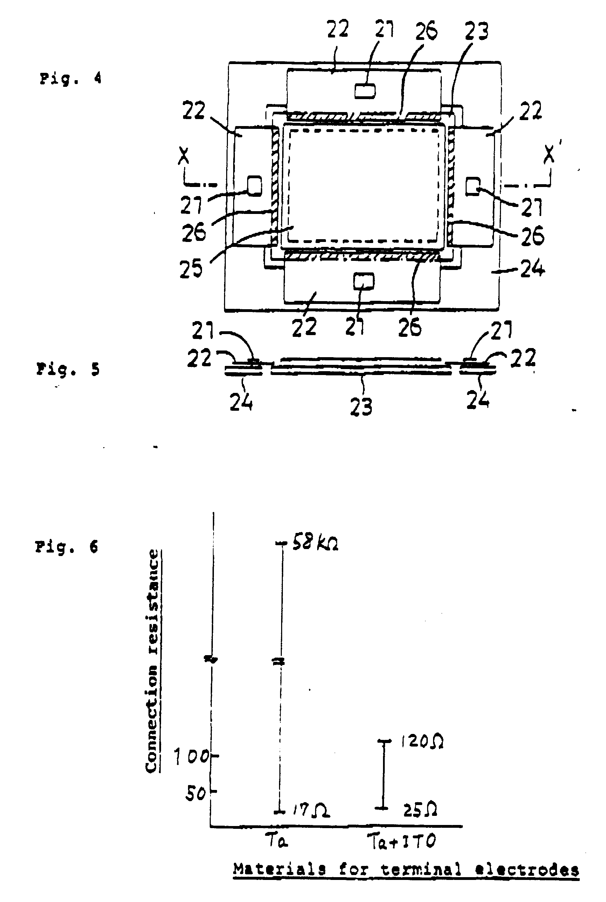

Thereafter, flexible printed-circuit boards equipped with a driving LSI are connected to the terminal electrodes 3 on the top of the liquid-crystal panel by means of an anisotropic conductive sheet. The production of a liquid-crystal display module by this method will be explained below. Figure 4 shows the planar structure of this liquid-crystal display module, and Figure 5 shows a sectional view taken along line X-X′ of Figure 4. The flexible printed-circuit boards 22 equipped with a liquid-crystal driving LSI 21 are connected to the terminal electrodes on the top of the liquid-crystal panel 23 through an anisotropic conductive sheet that is introduced in the space between the printed-circuit boards 22 and the terminal electrodes. Also, a double-sided printed-circuit board 24 that has input signal lines (common wiring) is attached to the opposite face of the flexible printed-circuit boards 22, resulting in a liquid-crystal display module.

In this case, the Ta of the terminal electrode 3 deteriorates significantly (that is, becomes oxidized) upon the curing of the polyimide mentioned above (at 200°C for 2 hours), upon the curing of the sealing resin (at 180°C for 2 hours), or the like, and therefore the connection to the flexible printed-circuit board by means of the anisotropic conductive sheet becomes unstable.

### SUMMARY OF THE INVENTION

According to the present invention, a liquid crystal panel comprising a plurality of thin-film transistors, each having a gate electrode, and terminal electrodes electrically connected to the gate electrodes, the terminal electrodes comprising a layer of the same material as the gate electrodes, is characterised by a transparent conductive coating formed on each of said terminal electrodes to protect the latter from oxidation when the panel is heated, during its subsequent manufacture, to a temperature at which exposed terminal electrodes would otherwise be oxidised.

In a preferred embodiment, each thin-film transistor has a gate insulator film and an amorphous semiconductor layer formed thereon, said gate insulator film comprising an anodic oxidation film formed on said gate electrode and a protective insulator film formed on said anodic oxidation film.

In a preferred embodiment, the transparent conductive coating is made of indium tin oxide (ITO).

In a preferred embodiment, the gate electrode is made of Ta and said anodic oxidation film is made of Ta₂O₅.

In a preferred embodiment, the amorphous semiconductor layer is made of amorphous silicon.

Thus, the invention described herein makes possible the objectives of (1) providing a liquid- crystal panel comprising thin-film transistors, in which a terminal electrode for a gate electrode of the thin-film transistor has a two-layered structure comprising a layer made of an electrode material that can be treated by anodic oxidation to improve the device characteristics of the thin-film transistors, and a transparent conductive coating formed on the said layer, so that it is possible to obtain stable connections at the terminal electrode for the gate electrode; and (2) providing a liquid-crystal panel with excellent display quality and high reliability because of the stable connections at the terminal electrode for the gate electrode.

### BRIEF DESCRIPTION OF THE DRAWINGS

This invention will be further described with reference to the accompanying drawings as follows:
Figures 1a and 1b are sectional views showing various structures of terminal electrodes provided in a liquid-crystal panel of this invention;
Figure 2 is a sectional view showing a basic structure of a known thin-film transistor;
Figure 3 is a schematic view showing TFT gate electrodes and terminal electrodes of a liquid-crystal panel;
Figure 4 is a plan view showing a liquid-crystal display module that employs a liquid-crystal panel;
Figure 5 is a sectional view taken along line X-X′ of Figure 4; and
Figure 6 shows variations in connection resistance when flexible printed-circuit boards equipped with a driving LSI are connected to the terminal electrodes of a liquid-crystal panel.

### DESCRIPTION OF THE PREFERRED EMBODIMENT

Each of the terminal electrodes of a liquid crystal panel of this invention has a two-layered structure with the ITO film 9 remaining even on the top of the terminal electrode 3 in the process described above, as shown in Figure 1a and 1b. Because ITO is an oxide, it does not decompose even at the high temperatures of the treatment described above, and is stable.

After the deposition of the Ta film on the top of the glass substrate 1, photolithography is used to form the gate electrodes 2a, the gate bus lines 2b, and the terminal electrodes 3. Then, by the use of photolithography, only the gate electrodes 2a to be treated by anodic oxidation are exposed. The procedure of anodic oxidation, the formation of the second insulator film 5 on the top of the first insulator film 4, the formation of the semiconductor layer 6 of amorphous silicon, and the formation of the source electrode 7 and the drain electrode 8 are carried out in the same way as for the conventional example given above.

Next, the ITO film 9 is formed as the picture elements. At this time, windows of the mask area that correspond to the terminal electrodes 3 are opened, and as shown in Figure 1a and 1b, the ITO film 9 is formed even on the top of each terminal electrode 3. Figure 1a shows the case in which the mask window and the terminal electrode 3 are of the same size, and Figure 1b shows the case in which the mask window is larger than the terminal electrode 3.

In this example, the ITO film 9 is formed on the top of the terminal electrodes 3, but it is also possible for the ITO film to be formed on the top of the gate bus lines 2b as well.

The later steps are the same as in the conventional example given above.

The liquid-crystal display module obtained in this way was evaluated for the connection resistance of the terminal electrode for the gate electrode. The differences in the stability of the connection resistance when the flexible printed-circuit boards were connected to the terminal electrodes that are made of a Ta film of Ta + ITO films are shown in Figure 6. In each case, 200 liquid-crystal display modules were formed and evaluated. The connecting surface area of the terminal electrode for the gate electrode was 0.1 x 3 mm². When only a Ta film was used for the terminal electrode, rather diverse values for the connection resistance were obtained within the limits of 17 Ω to 58 KΩ. When the Ta + ITO film was used for the terminal electrode, substantially constant values ranging from 25 to 120 Ω were obtained. As shown in Figure 6, it is possible to obtain stable connection between the liquid-crystal panel and the flexible printed-circuit board equipped with a driving LSI by the use of two-layered terminal electrodes comprising a layer made of an electrode material that can be treated by to anodic oxidation to improve the device characteristics of the thin-film transistors, and a transparent conductive coating made of, for example, ITO.

Various other modifications can be readily made by those skilled in the art without departing from the scope of the claims.

## Claims

1. A liquid crystal panel comprising a plurality of thin-film transistors, each having a gate electrode (2a), and terminal electrodes (3) electrically connected to the gate electrodes (2a), the terminal electrodes (3) comprising a layer of the same material as the gate electrodes (2), characterised by a transparent conductive coating (9) formed on each of said terminal electrodes (3) to protect the latter from oxidation when the panel is heated, during its subsequent manufacture, to a temperature at which exposed terminal electrodes (3) would otherwise be oxidised.

2. A liquid-crystal panel according to claim 1, wherein each thin-film transistor has a gate insulator film (4,5) and an amorphous semiconductor layer (6) formed thereon, said gate insulator film comprising an anodic oxidation film (4) formed on said gate electrode (2a) and a protective insulator film (5) formed on said anodic oxidation film (4).

3. A liquid-crystal panel according to claim 2, wherein said gate electrode (2a) is made of Ta and said anodic oxidation film is made of Ta₂0₅.

4. A liquid-crystal panel according to claim 2 or 3, wherein said amorphous semiconductor layer (6) is made of amorphous silicon.

5. A liquid-crystal panel according to any preceding claim, wherein said transparent conductive coating (9) is made of indium tin oxide (ITO).

6. A liquid-crystal panel according to any preceding claim, where gate bus lines (2b) electrically connecting the terminal electrodes (3) to the gate electrodes (2a) also have a transparent conductive coating (9) thereon.

7. A liquid-crystal panel according to claim 6, wherein the gate bus lines (2b) comprise a layer of the same material as the gate electrodes (2a).

8. A liquid-crystal panel according to any preceding claim, wherein picture elements connected to drain electrodes (8) of the thin-film transistors are formed of the same material as the transparent conductive coating (9) on the terminal electrodes (3).

## Patentansprüche

1. Flüssigkristall-Anzeigetafel mit mehreren Dünnfilmtransistoren, von denen jeder eine Gateelektrode (2a) aufweist, und Anschlußelektroden (3), die elektrisch mit den Gateelektroden (2a) verbunden sind und eine Schicht aus demselben Material wie dem der Gateelektroden (2) aufweisen, **gekennzeichnet durch** eine transparente, leitende Beschichtung (9), die auf jeder Anschlußelektrode (3) ausgebildet ist, um die letztere gegen Oxidation zu schützen, wenn die Anzeigetafel während der anschließenden Herstellbearbeitung auf eine Temperatur erwärmt wird, bei der andernfalls freiliegende Anschlußelektroden (3) oxidiert würden.

2. Flüssigkristall-Anzeigetafel nach Anspruch 1, bei der jeder Dünnfilmtransistor einen Gateisolatorfilm (4, 5) und eine darauf ausgebildete amorphe Halbleiterschicht (6) aufweist, wobei der Gateisolatorfilm einen auf der Gateelektrode (2a) ausgebildeten anodischen Oxidationsfilm (4) und einen auf diesem ausgebildeten Schutzisolatorfilm (5) aufweist.

3. Flüssigkristall-Anzeigetafel nach Anspruch 2, bei der die Gateelektrode (2a) aus Ta besteht und der anodische Oxidationsfilm aus Ta₂O₅ besteht.

4. Flüssigkristall-Anzeigetafel nach Anspruch 2 oder 3, bei der die amorphe Halbleiterschicht (6) aus amorphem Silicium besteht.

5. Flüssigkristall-Anzeigetafel nach einem der vorstehenden Ansprüche, bei der die transparente, leitende Beschichtung (9) aus Indiumzinnoxid (ITO) besteht.

6. Flüssigkristall-Anzeigetafel nach einem der vorstehenden Ansprüche, bei der auch Gatebusleitungen (2b), die die Anschlußelektroden (3) elektrisch mit den Gatelektroden (2a) verbinden, eine transparente, leitende Beschichtung (9) tragen.

7. Flüssigkristall-Anzeigetafel nach Anspruch 6, bei der die Gatebusleitung (2b) eine Schicht aus demselben Material wie dem der Gateelektroden (2a) aufweisen.

8. Flüssigkristall-Anzeigetafel nach einem der vorstehenden Ansprüche, bei der mit den Drainelektroden (8) der Dünnfilmtransistoren verbundene Bildelemente aus demselben Material wie die transparente, leitende Beschichtung (9) auf den Anschlußelektroden (3) bestehen.

## Revendications

1. Panneau à cristaux liquides comportant une pluralité de transistors à film mince, chacun ayant une électrode de grille (2a), et des électrodes de connexion (3) électriquement connectées aux électrodes de grille (2a), les électrodes de connexion (3) comportant une couche du même matériau que les électrodes de grille (2a), caractérisé par un revêtement conducteur transparent (9) déposé sur chacune desdites électrodes de connexion (3) pour protéger celles-ci de l'oxydation quand le panneau s'échauffe, au cours de sa fabrication ultérieure, jusqu'à une température à laquelle les électrodes de connexion (3) exposées seraient, sinon, oxydées.

2. Panneau à cristaux liquides selon la revendication 1, dans lequel chaque transistor à film mince a un film d'isolation de grille (4, 5) et une couche semiconductrice amorphe (6) par-dessus, ledit film d'isolation de grille étant constitué d'un film obtenu par oxydation anodique (4) déposé sur ladite électrode de grille (2a) et un film isolant protecteur (5) déposé sur ledit film obtenu par oxydation anodique (4).

3. Panneau à cristaux liquides selon la revendication 2, dans lequel ladite électrode de grille (2a) est en tantale et ledit film obtenu par oxydation anodique en Ta2O5.

4. Panneau à cristaux liquides selon la revendication 2 ou 3, dans lequel ladite couche semiconductrice amorphe (6) est en silicium amorphe.

5. Panneau à cristaux liquides selon n'importe laquelle des revendications précédentes, dans lequel ledit revêtement protecteur transparent (9) est en oxyde d'étain dopé à l'indium (ITO).

6. Panneau à cristaux liquides selon n'importe laquelle des revendications précédentes, dans lequel des lignes de bus de grille (2b) connectant électriquement les électrodes de connexion (3) aux électrodes de grille (2a) sont elles aussi recouvertes d'un revêtement protecteur transparent (9).

7. Panneau à cristaux liquides selon la revendication 6, dans lequel les lignes de bus de grille (2b) comportent une couche du même matériau que les électrodes de grille (2a).

8. Panneau à cristaux liquides selon n'importe laquelle des revendications précédentes, dans lequel des éléments d'image connectés aux électrodes de drain (8) des transistors à film mince sont constitués du même matériau que le revêtement protecteur transparent (9) des électrodes de connexion (3).
